# EUROPEAN PATENT SPECIFICATION

(11) **EP 1 916 465 B1**
(45) Date of publication and mention of the grant of the patent: **23.10.2013**
(21) Application number: 06123018.1
(22) Date of filing: 26.10.2006
(51) Int. Cl.: F16L 59/065

(54) **Vacuumed heat barrier**
Vakuum Wärmedämmschicht
Barrière thermique à vide

(43) Date of publication of application: 30.04.2008
(73) Proprietor: Vestel Beyaz Esya Sanayi ve Ticaret A.S., 45030 Manisa (TR)
(72) Inventor: TURAN, Halil, 273/1 SOKAK N. 36/4, Bornova 35030 IZMIR (TR); YILMAZ, Umut, VESTEL BEYAZ ESYA SANAYI, 35150, IZMIR (TR); ÖZKILIÇ, Sibel, VESTEL BEYAZ ESYA SANAYI, N. 38/10 BORNOVA, 35030, IZMIR (TR)
(74) Representative: Cayli, Hülya

(56) References cited:
- EP-A- 1 477 752
- EP-A1- 0 771 995
- EP-A2- 0 190 582
- WO-A-87/01360
- DE-B- 1 257 802
- DE-U1- 29 711 769
- JP-A- 7 055 088
- JP-A- 7 071 867
- JP-A- 7 077 383
- JP-A- 8 021 594
- JP-A- 8 338 684
- JP-A- 10 318 666
- JP-A- 11 201 376
- JP-A- 57 187 242
- JP-A- 61 096 288
- JP-A- 61 265 481
- JP-A- 63 163 765
- US-A- 4 409 770
- US-A- 5 090 981
- US-A- 5 327 703
- US-A- 5 331 789

## Description

### Technical Field

This invention is related to the vacuumed heat barriers which reduce the heat transfer of the volumes having different internal environment temperatures both between each other and with the external environment and provide heat insulation, and the production methods thereof.

### Prior Art

In the prior art, different methods are used in order to prevent the heat exchange of the coolers and/or the freezers with the external environment. The polyurethane foam which is one of these methods is used in the vast majority of the coolers produced presently in order to provide heat insulation. The polyurethane foam which is obtained by mixing two or more chemical liquids at certain ratios is injected between the refrigerator inner and outer surfaces and as a result of the chemical reaction that occurs; its volume expands, it passes to the solid state from the liquid state and completely fills the volume which remains between these surfaces. In this way, the heat transfer of the cooler with the external environment is reduced and its isolation is provided. The other material which is used to provide heat isolation is the styrofoam. The styrofoam which is used as ready plates is used to provide heat isolation especially between the internal volumes at different temperatures.

Another method which is used in order to provide heat isolation in the coolers is the vacuum isolation panels. In the system disclosed in patent document JP2003227594, the vacuum isolation panel comprises support material, membrane, desiccant and getter. In order to prevent these materials to subside when a vacuum is applied; the materials such as perlite, stone wool, glass wool and silica are used as a support material. The vacuum retention time of vacuum isolation panels varies according to the gas permeability of the membrane used. Since the gas and the damp which may occur in the vacuum environment increase the pressure, getter and desiccant are used in order to prevent the gas and damp formation.

The published patent document JP2005299972 also discloses a vacuum isolation panel. In this system, the vacuum isolation panel has a filling material comprising glass wool. The heat isolation material, urethane, is filled to the side surfaces of the panel which is bent in the form of "U".

In the published patent document JP2005345025, a new inorganic fiber which is produced in the form of a plate and the waste inorganic fiber are pressed and the pressed material is combined with the binding material and subjected to the hot press. Thus, the filling material is prepared. The filling material is placed into the coating material which is composed of a gas film and de-aerated. The vacuum isolation panel which is formed in this way is placed between the inner and the outer panels.

Although the heat transmission coefficients of the systems disclosed in said patent documents JP2003227594, JP2005299972, JP2005345025 are very low, their production costs are too high.

In the patent document US6158233, the void which is formed between the panels is vacuumed and de-aerated without placing any filling material between the panels. The continuity of the vacuum environment in the system is provided with the vacuum pump which is placed into the system. The major disadvantage of this system is the requirement of continuous vacuum application.

In the system disclosed in the published patent document JP9264490, the heat isolation panels of which inside is filled with glass spheres are filled with carbon dioxide gas of high purity and vacuumed. The insulation is provided with carbon dioxide which is found in the frozen state at very low temperatures.

In the heat insulation panel which is disclosed in the published patent document JP11201376, a cardboard with corrugated structure is used as a support material. The air between the voids of the cardboard is vacuumed to some extent in the vacuum environment and this structure is subsequently coated with the film layers.

In the published patent document DE29711769, other vacuumed insulation plates are disclosed. In DE29711769, a hollow or cellular insulation plates and an insulation layer covering the outer surfaces of the plates is explained. In order to increase the load resisting capacity of the plates, supporting ribs are used inside the body. In the present invention, although a structure similar to the one disclosed in DE29711769 is used; heat insulation characteristics is improved by using a new insulation layer covering the plates. The related details are explained below.

Another insulation plate for freezing compartments is disclosed in the published patent application JP07077383. It explains, freezing refrigerator and its thermal insulation structure, and especially aiming at recycling decomposition. It is related with a vacuum insulation structure suitable for an easy freezing refrigerator. The present invention differs from JP07077383, when improved insulation layers are concerned.

Also, a method for making insulation panels is discussed in patent application EP0771995. The method involves containing microscopic hollow glass spheres in a sheet-like enclosure evacuated by a pump, via an opening which is sealed. A metal and synthetic composite sheet which is sealed against diffusion is used as the enclosure. The present invention differs from EP0771995, when the production method of the subject matter of gas barrier is concerned.

The vacuumed heat barrier was developed as an alternative to the above-disclosed insulation systems and the production methods thereof. With the invention, the vacuumed heat barriers, which are produced as having a hollow or cellular structure from a material with low heat, gas and moisture conductivity and formed in a way that the inside is vacuumed and the tips are closed, are used to prevent the heat exchange of the cooler interior chambers with the external environment and between each other. The plate which is formed as cellular is placed into a vacuum chamber and the chamber pressure is reduced to low vacuum values. Said plate is coated with at least one insulation layer with low gas permeability in this vacuum environment and the chamber pressure is increased to the atmospheric pressure values. Although the cellular plates can be produced such that they can be vacuumed from a single point, they can also be formed in a structure in which each cell can be vacuumed separately. With the supports which are formed on the bottom and the top surfaces of the cellular plates, the subsidence of the materials under vacuum is prevented. Said plate structure is produced in a cost-effective manner with no need for the use of materials such as silica, aerogel, polyurethane foam, glass wool which are used in the old systems. In addition, no continuous vacuum application for the panels is required. When a vacuum process is applied to the cells of the vacuumed heat barrier; a very small amount of gas molecules remains inside these cells. By the presence of the gasses with low heat conductivity in the vacuum environment, the heat transfer that occurs due to the gas molecules which remain in the post-vacuum environment can be minimized. With the invention, the heat insulation in the coolers is provided by placing the vacuumed heat barrier modules into the regions of the cooler where the heat transfer occurs.

### Aim of the invention

An aim of this invention is to form a vacuumed heat barrier in order to reduce the heat transfer of the volumes having different internal environment temperatures both between each other and with the external environment and provide heat insulation.

An aim of the invention is to perform a cost-effective vacuumed heat barrier production which will not necessitate re-vacuum due to the gas exchange.

Another aim of the invention is to enable the use of the vacuumed heat barrier in presently used refrigerators, deep-freezers, industrial coolers, mobile coolers, cold stores and all other applications which require heat insulation.

### Description of the Drawings

The vacuumed heat barrier is shown in the attached drawings, wherein:
Fig. 1 is a side sectional view of the vacuumed heat barrier.
Fig. 2 is a side sectional view of the insulation layer.
Fig. 3 is a top sectional view of the heat barrier to which vacuum is applied from a single point.
Fig. 4 is a top sectional view of the heat barrier to which vacuum is applied from a single point.
Fig. 5 is a top view of the vacuumed heat barrier where vacuum is separately applied to each cell thereof.
Fig. 6 is a top view of the vacuumed heat barrier where vacuum is separately applied to each cell thereof.
Fig. 7 is the schematic views of the alternative embodiments of the hollow or the cellular plate.

The parts in the figures are numbered one by one and the corresponding terms of these numbers are given below.
Vacuumed heat barrier (A)
Hollow or cellular plate (1)
Insulation layer (2)
Void (3)
Support ribs (4)
Gas with low heat conductivity (5)
Insulation sheets (6, 6')
Insulation gas (7)

### Disclosure of Invention

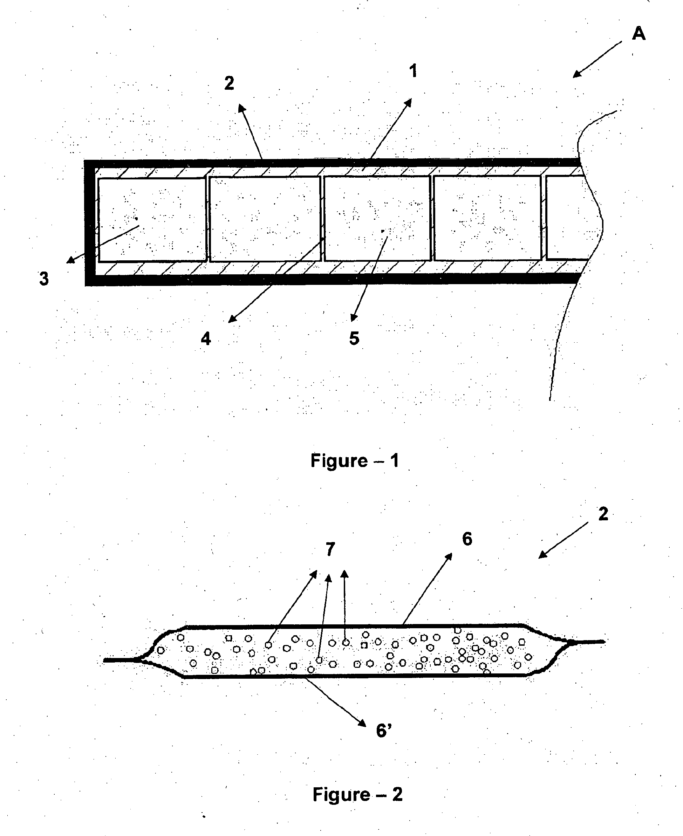

The vacuumed heat barrier (A), of which side sectional view is provided in fig. 1, which is used to reduce the heat transfer of the volumes having different internal environment temperatures both between each other and with the external environment and provide heat insulation comprises a hollow or cellular plate (1) which is made of materials with low heat transmission coefficient and at least one insulation layer (2) which is used to protect the vacuum environment inside the hollow or cellular plate (1), covers the outer surfaces of the plate (1) completely and has a very low gas permeability. In order to ensure the plate (1) to resist against the force created by the atmospheric pressure on its outer side due to the vacuum which is formed inside the hollow or cellular plate (1), there are support ribs (4) in the inner side of the plate (1) and between at least two outer large surfaces thereof. The voids (3) which remain between the support ribs (4) are the compartments where a vacuum environment is provided.

Fig. 2 provides a side sectional view of the insulation layer (2). Said layer (2) is a structure which is obtained through closing the edge junctures of the sheets (6, 6') completely after a insulation gas (7) with low heat conductivity is filled between two superposed insulation sheets (6, 6') and called the gas jacket. The insulation sheets (6, 6') are chosen from the materials with very low gas permeability in order to prevent said gas (7) to leak out.

In another exemplary embodiment of the invention, it is possible to use a glass film as an insulation layer (2). In other exemplary embodiment of the invention, the multi-layered barrier films which are produced through the lamination of the thin sheets made of polyethylene terephthalate (PET), aluminum (Al) and linear low density polyethylene (LLDPE) materials can be used as an insulation layer (2). The common characteristic of these said films is that their gas permeability is very low. In another embodiment of the invention, it is possible to use at least two of above-mentioned gas jacket, glass film and said multi-layered barrier film together as an insulation layer (2). The reason why these said layers are used together is to minimize the gas transition between the external environment and the void (3) inside the plate (1).

During the production of the vacuumed heat barrier (A), the hollow or cellular plate (1) is placed into a vacuum chamber and the internal pressure of the chamber is reduced to very low values through vacuum. In this method, the vacuum process is performed after the internal volume of the vacuum chamber is filled with a gas or gas mixture with transmission coefficient which is lower than that of the air. Thus, the gasses which remain inside the internal volume of the plate even at a small amount are the gasses, instead of the air, that have a lower transmission coefficient than the air. Argon, carbon dioxide, krypton and xenon can be given as an example to the gasses used herein. In the vacuum chamber, it is also possible to use air instead of said special gasses. However, with these gasses, the cost-effective vacuumed heat barriers with low thermal transmission can be obtained without falling to the vacuum levels which are necessary for the air. In the vacuum process which is performed in an environment where the air or the gasses other than the air are used in the vacuum chamber, it is preferred to reach high vacuum (HV) or ultra high vacuum (UHV) values in order to allow the plate (1) to meet the most effective heat isolation.

After the vacuum process which is performed in a vacuum chamber where these said gasses (argon, carbon dioxide, xenon, krypton, air, etc...) exist, the outer surfaces of the plate (1) are coated with said insulation layer (2) in the same environment. Thereafter, the sealing of the plate (1) is provided by closing the holes thereof which are opened to the external environment for the vacuum process. Following this process, the pressure of the vacuum chamber is brought to the normal atmosphere pressure slowly and the plate (1) is removed from the vacuum chamber.

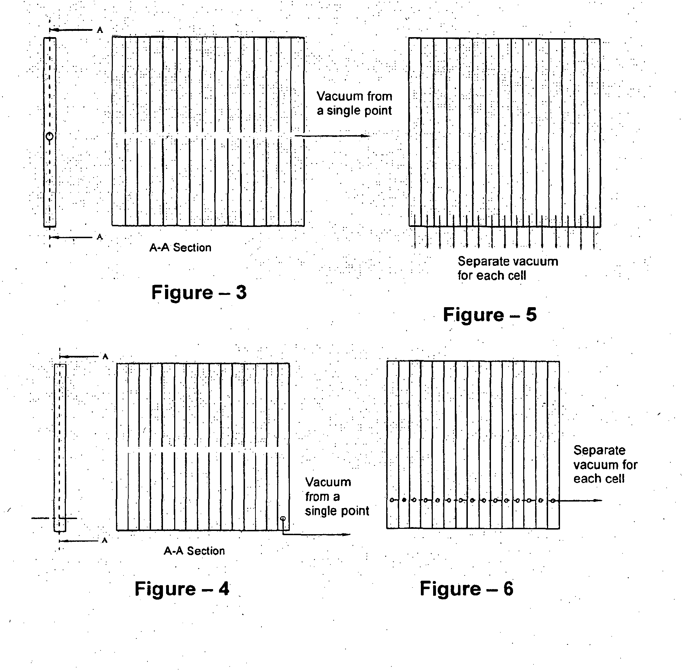

In the plates (1) which are subjected to the vacuum process, it is possible to use a structure where the cells, each connected to each other, are vacuumed from a single point (figs. 3-4) or a structure where the cells, each independent from each other, are vacuumed separately (figs. 5-6).

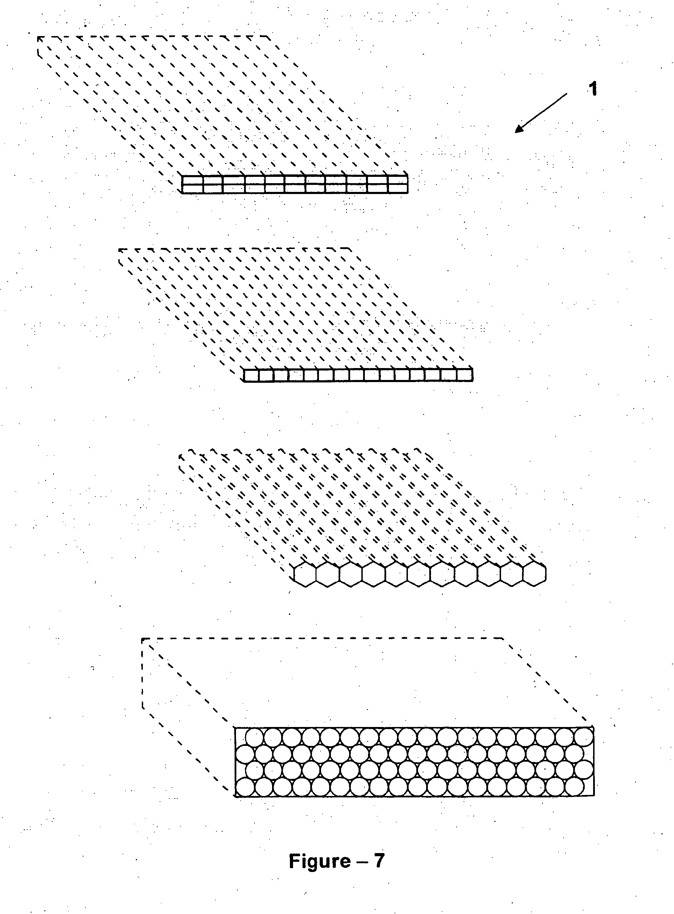

Fig. 7 provides the schematic views of the alternative embodiments of the hollow or cellular plate (1). It is possible to use hollows or cells as polygonal or circular cross section. The plates with very low heat transmission coefficient are obtained through juxtaposing and superposing these said hollows or cells and vacuuming each cell separately.

## Claims

1. A vacuumed heat barrier (A); which is used to reduce heat transfer between volumes having different temperatures and provides heat insulation, which comprises:
- a hollow or cellular plate (1) which is made of materials with a low heat transmission coefficient;
- at least one insulation layer (2) which is used to protect a vacuum environment inside the hollow plate (1), covers the outer surfaces of the plate (1) completely and has a very low gas permeability;
- in order to ensure the plate (1) to resist against the force created by the atmospheric pressure on its outer side due to the vacuum which is formed inside the hollow plate (1), support ribs (4) in the inner side of the plate (1) and between two large surfaces thereof: and
- said insulation layer further comprising two superposed insulation sheets (6,6') with a very low gas permeability, closed by their edge junctures;
**characterized in that**
an insulation gas (7) with low heat conductivity is filled between said sheets (6,6').

2. A vacuumed heat barrier (A) according to claim 1, wherein the insulation layer (2) further comprises at least a glass film.

3. A vacuumed heat barrier (A) according to claim 1, wherein the insulation layer (2) further comprises at least a multi-layered barrier film laminated by polyethylene terephthalate, aluminum and linear low density polyethylene thin layers.

4. A vacuumed heat barrier (A) according to claim 1, wherein the insulation layer (2) further comprises at least a glass film; and also a multi-layered barrier film which is laminated by polyethylene terephthalate, aluminum and linear low density polyethylene thin layers.

5. A vacuumed heat barrier (A) production method comprising the following stages:
i. a hollow plate (1) comprising support ribs (4) in the inner side of the plate and between two large surfaces thereof, is placed into a vacuum chamber, the internal volume of this chamber is composed of air or this volume is filled with a gas with lower thermal transmission coefficient than that of air;
ii. the internal pressure of the chamber is reduced to very low values through a vacuum;
iii. the outer surfaces of the plate (1) are coated with an insulation layer (2) comprising two superposed insulation sheets (6,6') with very low gas permeability, closed by their edge junctures; an insulation gas with low heat conductivity filled between said sheets (6,6');
iv. holes in the plate which were open to the external environment for the vacuum process are closed to provide sealing;
v. the pressure of the vacuum chamber is brought to the normal atmosphere pressure slowly and the plate (1) is removed from the vacuum chamber.

6. A vacuumed heat barrier (A) production method according to claim 5, wherein the second stage (ii), in the plates (1) which are subjected to the vacuum process, a structure where the cells, each connected to each other, are vacuumed from a single point is used.

7. A vacuumed heat barrier (A) production method according to claim 5, wherein the second stage (ii), in the plates (1) which are subjected to the vacuum process, a structure where the cells, each independent from each other, are separately vacuumed is used.

8. A vacuumed heat barrier (A) production method according to claim 5, wherein the third stage (iii), as an additional insulation layer (2), a glass film is used.

9. A vacuumed heat barrier (A) production method according to claim 5, wherein the third stage (iii), as an additional insulation layer (2); a multi-layered barrier film laminated by polyethylene terephthalate, aluminum and linear low density polyethylene thin layers; is used.

10. A vacuumed heat barrier (A) production method according to claim 5, wherein the third stage (iii), as additional insulation layers (2); a glass film; and also a multi-layered barrier film which is laminated by polyethylene terephthalate, aluminum and linear low density polyethylene thin layers; are used.

## Patentansprüche

1. Vakuumwärmedämmschicht (A) zum Verringern eines Wärmeübergangs zwischen Volumen unterschiedlicher Temperaturen und zum Schaffen einer Wärmeisolierung, umfassend:
- eine hohle oder zellulare Platte (1) bestehend aus Materialien mit einem geringen Wärmeübertragungskoeffizienten,
- wenigstens eine Isolationsschicht (2) zum Schützen einer Vakuumumgebung im Inneren der hohlen Platte (1), die die Außenflächen der Platte (1) vollständig bedeckt und eine sehr geringe Gaspermeabilität besitzt,
- Stützrippen (4) im Inneren der Platte (1) und zwischen deren beiden großen Flächen, um sicher zu stellen, dass die Platte (1) Kräften erzeugt durch den atmosphärischen Druck an ihrer Außenseite aufgrund des Vakuums im Inneren der holen Platte (1) widersteht, und
- wobei die Isolationsschicht des Weiteren zwei übereinanderliegende Isolationsbögen (6, 6') mit einer sehr geringen Gaspermeabilität umfasst, die an ihren Kantenverbindungen geschlossen sind,
**dadurch gekennzeichnet, dass** zwischen den Bögen (6, 6') ein Isolationsgas (7) mit geringer Wärmeleitfähigkeit eingefüllt ist.

2. Vakuumwärmedämmschicht (A) nach Anspruch 1, **dadurch gekennzeichnet, dass** die Isolationsschicht (2) des Weiteren wenigstens einen Glasfilm umfasst.

3. Vakuumwärmedämmschicht (A) nach Anspruch 1, **dadurch gekennzeichnet, dass** die Isolationsschicht (2) des Weiteren wenigstens einen Multilayer-Sperrfilm umfasst, der durch dünne Schichten aus Polyethylenterephthalat. Aluminium und linearem Polyethylen niederer Dichte laminiert ist.

4. Vakuumwärmedämmschicht (A) nach Anspruch 1, **dadurch gekennzeichnet, dass** die Isolationsschicht (2) des Weiteren wenigstens einen Glasfilm und außerdem einen Multilayer-Sperrfilm umfasst, der aus dünnen Schichten aus Polyethylenterephthalat, Aluminium und linearem Polyethylen niederer Dichte laminiert ist.

5. Verfahren zum Herstellen einer Vakuumwärmedämmschicht (A), umfassend die folgenden Schritte:
i. eine hohle Platte (1) umfassend Stützrippen (4) an der Innenseite der Platte und zwischen deren beiden großen Flächen wird in einer Vakuumkammer angeordnet, deren Innenvolumen aus Luft zusammengesetzt ist oder mit einem Gas mit einem geringeren thermischen Übergangskoeffizienten als Luft gefüllt ist,
ii. der Innendruck der Kammer wird durch vakuumieren auf sehr geringe Werte gesenkt,
iii. die äußeren Seiten der Platte (1) werden mit einer Isolationsschicht (2) beschichtet, die zwei übereinanderliegende Isolationsbögen (6, 6') von sehr geringer Gaspermeabilität besitzt, die an ihren Kantenverbindungen geschlossen sind, und ein Isolationsgas von geringer Wärmeleitfähigkeit wird zwischen die Bögen (6, 6') gefüllt,
iv. Öffnungen in der Platte, die für den Vakuumierprozess zur Außenumgebung offen waren, werden durch Dichten verschlossen,
v. der Druck in der Vakuumkammer wird langsam auf Normaldruck gebracht, und die Platte (1) wird aus der Vakuumkammer entfernt.

6. Verfahren zum Herstellen einer Vakuumwärmedämmschicht (A) nach Anspruch 5, **dadurch gekennzeichnet, dass** in dem zweiten Schritt (ii.), in dem die Platten (1) dem Vakuumierprozess ausgesetzt werden, eine Struktur verwendet wird, bei der die Zellen jeweils miteinander verbunden von einem einzigen Punkt vakuumiert werden.

7. Verfahren zum Herstellen einer Vakuumwärmedämmschicht (A) nach Anspruch 5, **dadurch gekennzeichnet, dass** im zweiten Schritt (ii.), bei dem die Platten (1) dem Vakuumierprozess ausgesetzt werden, eine Struktur verwendet wird, bei der die Zellen jeweils unabhängig voneinander sind und separat vakuumiert werden.

8. Verfahren zum Herstellen einer Vakuumwärmedämmschicht (A) nach Anspruch 5, **dadurch gekennzeichnet, dass** im dritten Schritt (iii.) als zusätzliche Isolationsschicht (2) ein Glasfilm verwendet wird.

9. Verfahren zum Herstellen einer Vakuumwärmedämmschicht (A) nach Anspruch 5, **dadurch gekennzeichnet, dass** in dem dritten Schritt (iii.) als zusätzliche Isolationsschicht (2) ein Multilayer-Sperrfilm verwendet wird, der aus dünnen Schichten aus Polyethylenterephtalat, Aluminium und lineran Polyethylen niederer Dichte laminiert ist.

10. Verfahren zum Herstellen einer Vakuumwärmedämmschicht (A) nach Anspruch 5, **dadurch gekennzeichnet, dass** in dem dritten Schritt (iii.) als zusätzliche Isolationsschicht (2) ein Glasfilm und außerdem ein Multilayer-Sperrfilm, der aus dünnen Schichten aus Polyethylenterephtalat, Aluminium und linearen Polyethylen niederer Dichte laminiert ist, benutzt werden.

## Revendications

1. Barrière thermique sous vide (A) qui est utilisée pour réduire le transfert de chaleur entre des volumes présentant différentes températures et fournit une isolation thermique, laquelle barrière comprend :
- une plaque creuse ou cellulaire (1) qui est en matériaux dotés d'un faible coefficient de transmission thermique ;
- au moins une couche d'isolation (2) qui est utilisée pour protéger un environnement sous vide à l'intérieur de la plaque creuse (1), recouvre complètement les surfaces extérieures de la plaque (1) et présente une très faible perméabilité aux gaz ;
- afin d'assurer la résistance de la plaque (1) contre la force créée par la pression atmosphérique sur son côté extérieur en raison du vide qui est formé à l'intérieur de la plaque creuse (1), des nervures de support (4) dans le côté intérieur de la plaque (1) et entre deux grandes surfaces de celle-ci ; et
- ladite couche d'isolation comprenant en outre deux feuilles d'isolation superposées (6, 6') avec une très faible perméabilité aux gaz, fermées par leurs jonctions angulaires ;
**caractérisée en ce**
**qu'**un gaz d'isolation (7) présentant une faible conductibilité à la chaleur est rempli entre lesdites feuilles (6, 6').

2. Barrière thermique sous vide (A) selon la revendication 1, dans laquelle la couche d'isolation (2) comprend en outre au moins un film de verre.

3. Barrière thermique sous vide (A) selon la revendication 1, dans laquelle la couche d'isolation (2) comprend en outre au moins un film barrière multicouche laminé par de fines couches de polyéthylène téréphtalate, d'aluminium et de polyéthylène à basse densité linéaire.

4. Barrière thermique sous vide (A) selon la revendication 1, dans laquelle la couche d'isolation (2) comprend en outre au moins un film de verre ; ainsi qu'un film barrière multicouche qui est laminé par de fines couches de polyéthylène téréphtalate, d'aluminium et de polyéthylène à basse densité linéaire.

5. Procédé de production de barrière thermique sous vide (A) comprenant les étapes suivantes :
i. une plaque creuse (1) comprenant des nervures de support (4) dans le côté intérieur de la plaque et entre deux grandes surfaces de celle-ci, est placée dans une chambre à vide, le volume interne de cette chambre est composé d'air ou ce volume est rempli d'un gaz présentant un coefficient de transmission thermique plus faible que celui de l'air ;
ii. la pression interne de la chambre est réduite à des valeurs très faibles par un vide ;
iii. les surfaces extérieures de la plaque (1) sont revêtues d'une couche d'isolation (2) comprenant deux feuilles d'isolation superposées (6, 6') avec une très faible perméabilité aux gaz, fermées par leurs jonctions angulaires ; un gaz d'isolation présentant une faible conductibilité à la chaleur étant rempli entre lesdites feuilles (6, 6') ;
iv. des trous dans la plaque qui sont ouverts à l'environnement externe pour le processus de vide sont fermés pour fournir une étanchéité ;
v. la pression de la chambre à vide est lentement amenée à la pression atmosphérique normale et la plaque (1) est retirée de la chambre à vide.

6. Procédé de production de barrière thermique sous vide (A) selon la revendication 5, dans lequel dans la seconde étape (ii), une structure est utilisée dans les plaques (1) qui sont soumises aux processus de vide, dans laquelle les cellules, reliées chacune les unes aux autres sont vidées à partir d'un seul point.

7. Procédé de production de barrière thermique sous vide (A) selon la revendication 5, dans lequel dans la seconde étape (ii), une structure est utilisée dans les plaques (1) qui sont soumises aux processus de vide, dans laquelle les cellules, indépendantes chacune les unes des autres sont mises sous vide séparément.

8. Procédé de production de barrière thermique sous vide (A) selon la revendication 5, dans lequel dans la troisième étape (iii), un film de verre est utilisé comme couche d'isolation supplémentaire (2).

9. Procédé de production de barrière thermique sous vide (A) selon la revendication 5, dans lequel dans la troisième étape (iii), un film barrière multicouche laminé par de fines couches de polyéthylène téréphtalate, d'aluminium et de polyéthylène à basse densité linéaire est utilisé comme couche d'isolation supplémentaire (2).

10. Procédé de production de barrière thermique sous vide (A) selon la revendication 5, dans lequel dans la troisième étape (iii), un film de verre ; ainsi qu'un film barrière multicouche qui est laminé par de fines couches de polyéthylène téréphtalate, d'aluminium et de polyéthylène à basse densité linéaire sont utilisés comme couches d'isolation supplémentaires (2).
